# EUROPEAN PATENT SPECIFICATION

(11) **EP 2 780 814 B1**
(45) Date of publication and mention of the grant of the patent: **01.02.2017**
(21) Application number: 11875849.9
(22) Date of filing: 15.11.2011
(51) Int. Cl.: G06F 15/16, H04L 12/24

(54) **MOBILIZED SENSOR SYSTEM**
MOBILISIERTE SENSORSYSTEM
SYSTÈME DE CAPTEURS MOBILISÉS

(43) Date of publication of application: 24.09.2014
(73) Proprietor: Hewlett Packard Enterprise Development LP, Houston, TX 77070 (US)
(72) Inventor: CHO, John Minjae, Herndon, Virginia 20171 (US)
(74) Representative: Stöckeler, Ferdinand
(86) International application number: PCT/US2011/060836
(87) International publication number: WO 2013/074090

(56) References cited:
- US-A1- 2009 241 108
- US-A1- 2009 326 709
- US-A1- 2011 050 422
- US-A1- 2011 218 730
- US-A1- 2011 218 730
- US-A1- 2011 241 833
- US-B2- 7 313 461

## Description

### BACKGROUND

Cloud computing requires large amounts of hardware for processing, storing, and communicating data. Such hardware can be provided in the form of data centers, e.g., buildings with many hardware units. Although many data-center maintenance operations, e.g., migrating workloads and turning hardware on or off, can be performed remotely, others, e.g., hot swapping a hard disk, call for operations to be performed at the location of a particular piece of computing equipment. For this reason, personnel are normally available on-site as "smart hands" to perform maintenance operations locally.

US 2009/0326709 A1 discloses a robotic device with a mobile platform, an extendable mass cover, a camera, and a sensor, which is capable of autonomously navigating a medical laboratory to collect humidity information to ensure laboratory humidity is within a desired value.

US 2011/0218730 A1 discloses a method for managing a data center using a mobile device.

US 2009/0241108 A1 discloses a virtual computing infrastructure.

### BRIEF DESCRIPTION OF THE DRAWINGS

The following figures represent examples and not the invention itself.
FIGURE 1 is a schematic diagram of a data system including a mobilized sensor system in accordance with an example.
FIGURE 2 is a flow chart of a process in accordance with an example.
FIGURE 3 is a schematic diagram of a data system including a mobilized automated sensor and collaboration system (MASACS) in accordance with an example.
FIGURE 4 is a schematic diagram of the mobilized automated sensor and collaboration system (MASACS) of the data system of FIG. 3.
FIGURE 5 is a flow chart of a process implementable in the data system of FIG. 3.

### DETAILED DESCRIPTION

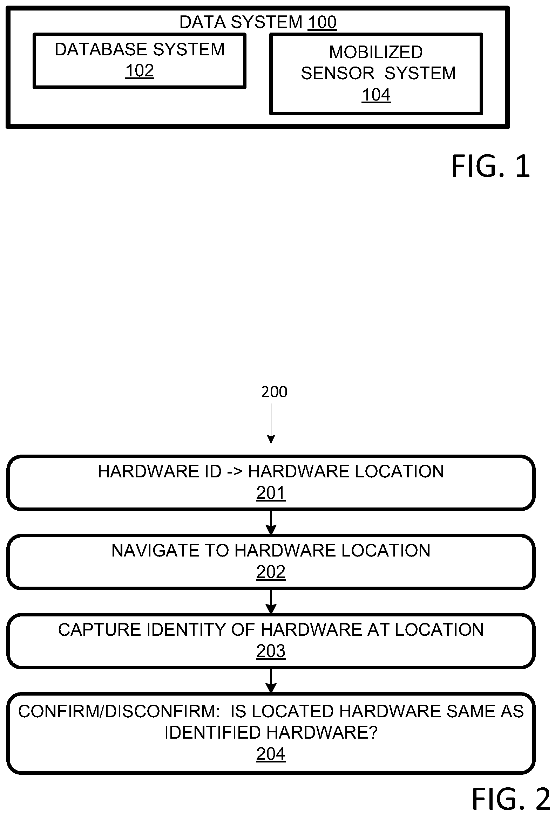

A data-system 100, shown in FIG. 1, provides for automated confirmation that a device in a data center is a device for which maintenance is intended. Human attentiveness can deteriorate in the face of mundane tasks, such as locating a particular device from a sea of such devices that may differ little in outward appearance. Overlooking a difference in a single digit or character of a serial number can result in a disruption in an active device rather than one that has been cleared for repair or replacement. Where the disruption affects a critical application, the costs in terms of lost time and money can be considerable.

To address this problem and others, data system 100 includes a database system 102 and a mobilized sensor system 104. Data system 100 implements a process 200, flow-charted in FIG. 2. Database system 102 is used to determine, at 201, a data-center location at which identified hardware is supposed to be found. Mobilized sensor system 104 navigates to the determined location at 202, capture an identity of "located" hardware found at the determined location at 203, and confirm or disconfirm whether "located" hardware found at that location is the identified hardware at 204.

When it comes to very complex and very mundane tasks (such as comparing a pair of serial numbers), automated systems are often more reliable than humans. An automated system is less likely to overlook a single difference in a ten-digit number. Mobilized system 104 can bring the advantages of automation to the data-center location where it is needed at any given time. Thus, by including mobile system 104, data-center maintenance system 100 can reduce the likelihood of costly errors and reduce the time involved in addressing the problems at hand.

Herein, a "data center" is a network of commonly managed and geographically co-located computing assets that are spatially proximate to each other. The computing assets of a data center include data processing assets such as servers and processors, storage assets, such as memory and hard disks, communications assets, such as network interface cards and switches, and facilities assets including building structures, floor space, ventilation and cooling systems, and power and other utility infrastructure. Depending on context, "data center" may or may not encompass software executing on the hardware assets of the data center.

Herein, a "database system" is a combination of hardware and software that defines one or more data structures relating types of data. For example, database system 102 relates data regarding hardware and software identities with data regarding hardware locations (e.g., within a data center). A database system can include a single flat-file or relational database or plural databases.

Herein, a "mobilized sensor system" is a self-supporting movable system that bears sensors and that can move under its own or other power. For example, a mobilized system can be self-powered like an android or golf-cart, or human powered like a shopping cart or tricycle. Note that a system may be portable, but not mobilized, e.g., consumer video cameras are "portable", but not "mobilized" as the term is used herein, because they are not self-supporting (when used).

One advantage of a mobilized sensor system as opposed to a merely portable system is that it is relatively easy to equip a self-standing mobilized sensor sytem to handle a variety of functions. In some examples, a mobilized sensor system includes all or part of a database system. In some examples, a mobilized sensor system communicates with all or part of a database system or personnel over a network. In some examples, a mobilized sensor system may include manipulative tools so that it can perform some or all of the physical actions involved in repairing or replacing a hardware component. In some examples, a mobilized sensor system determines whether or not a human maintenance person repairs are correct.

Virtualization is increasing employed in data centers to provide greater management flexibility. Virtualization involves adding software layers that emulate hardware; for example, hardware resources can be dynamically reallocated among virtual servers without interrupting the applications they host. Such dynamic allocation can increase the efficiency with which available hardware resources can be used, thus, decreasing the costs associated with running a data center. Similarly, virtualization can be applied to hardware components, such as hard disks and processors to provide greater flexibility in managing such resources.

While achieving greater flexibility, virtualization expands the range of expertise required to run a data center. In addition to expertise relating to software applications and hardware, expertise relating to virtualization technologies (several of which may be employed in the same data center) may be required to trouble-shoot a problem. In many cases, different vendors may have provided hardware, application software, and virtualization technology. Identifying the cause of a problem may be difficult without collaboration among different vendors and experts.

Collaboration enhanced mobilized automated sensor systems (CEMASSs) can include communications facilities that enhance such collaboration. For example, a mobilized sensor system can include video conferencing equipment. In one scenario, the video conferencing equipment can allow an off-site expert to collaborate with on-site smart-hands personnel while sharing a common video feed (e.g., of hardware) and other sensor data gathered by the CEMASS. Similarly, remote experts, e.g., from different vendors or service companies, may collaborate using the conferencing, imaging, and other sensing capabilities of a CEMASS.

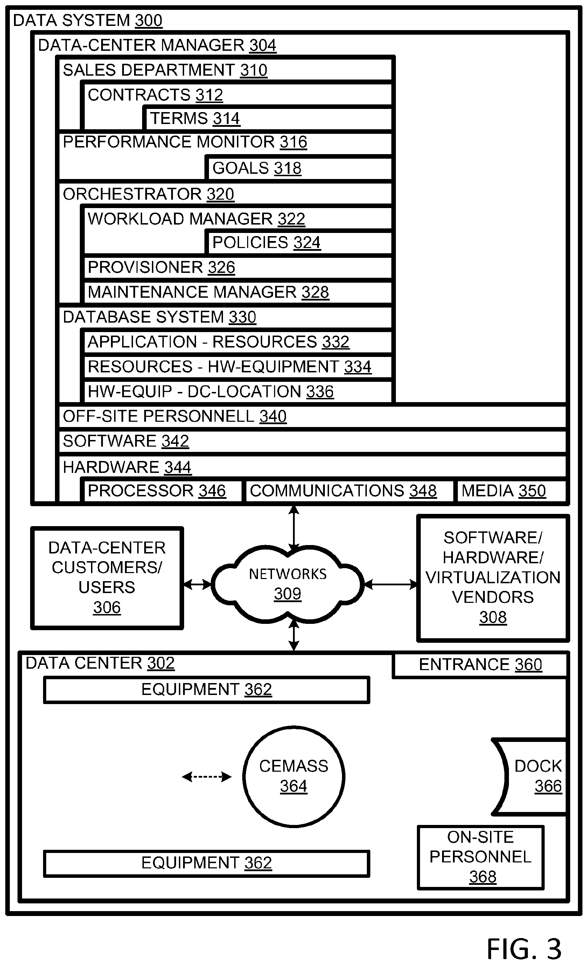

Accordingly, a data system 300, shown in FIG. 3, encompasses a data center 302, a data-center management system 304, data-center customers and users 306, and software, hardware, and virtualization vendors and service providers 308, and networks 309 over which other data-system components communicate. Data-center customers are entities that enter into contracts or other arrangements with data-center management 304 to host customer services and/or software on its data centers, e.g., data center 302; for example, an airline may enter a contract for hosting an airline reservation system. Data-center users are entities that use services and software hosted on data center 302; for example, people making reservations using an airline reservation system hosted on data center 302 are data center customers. Some users may also be customers and *vice-versa.*

In some cases, the relations between a customer and a data-center may be indirect. For example, data-center management 304 may manage several data centers, e.g., in different geographic locations. A customer may not care which data center is used or may want functions distributed among different data centers to better serve geographically diverse customers. A data-center contact may or may not be tied to a particular data center.

Data-center management 304 can include a sales department 310 that enters into contracts 312 with customers. The contracts specify terms 314 to which data-center management 304 and customers are to conform. Data-center management 304 includes a performance monitor 316, which is a multi-faceted system for monitoring the performance of data centers including data-center 302. Monitored performance can be compared against goals 318, e.g., as set by contract terms 314.

Data-center management 304 includes an orchestrator 320 that makes changes as appropriate to achieve goals 318. For example, orchestrator 320 includes a workload manager 322 that allocates workloads and computing resources to each other according to policies derived, at least in part, from goals 318. Orchestrator 320 also includes a provisioner 326 for activating, shutting down, configuring and reconfiguring equipment including that of data center 302. In addition, orchestrator 320 includes a maintenance manager 328 that handles scheduled maintenance, replacements, and repairs.

Data-center manager 304 also includes a database system 330 that associates application identifiers with server identifiers at 332, virtual-server identifiers with hardware hosts (servers) at 334, and hardware servers with physical locations, e.g., within a data center, at 336.

Some of the functions above are performed at least in part by humans and/or at least in part by computers. Accordingly, data-center manager 304 may include personnel 340, computer software 342, and computer hardware 344, including a processor 346, communications devices 348, and media 350 (e.g., on which software 342 is encoded).

Data center 302 can include an entrance (and exit) 360, equipment 362, a collaboration-enhanced mobilized automated sensor system or "CEMASS" 364, and a dock 366 for CEMASS 364. At any given time, one or more personnel 368 may be on site in data center 302. Equipment 362 can include hardware servers, processors, communications devices, media (e.g., hard disks, solid-state memory), air handling and conditioning systems, and power deliver systems. The communications devices can include racks of switches, as well as wireless access points that can be used by CEMASS 364 for communication and navigation. Also, CEMASS 354 can communicated "over wires" when docked at dock 366, which also serves as a charging station for CEMASS 364.

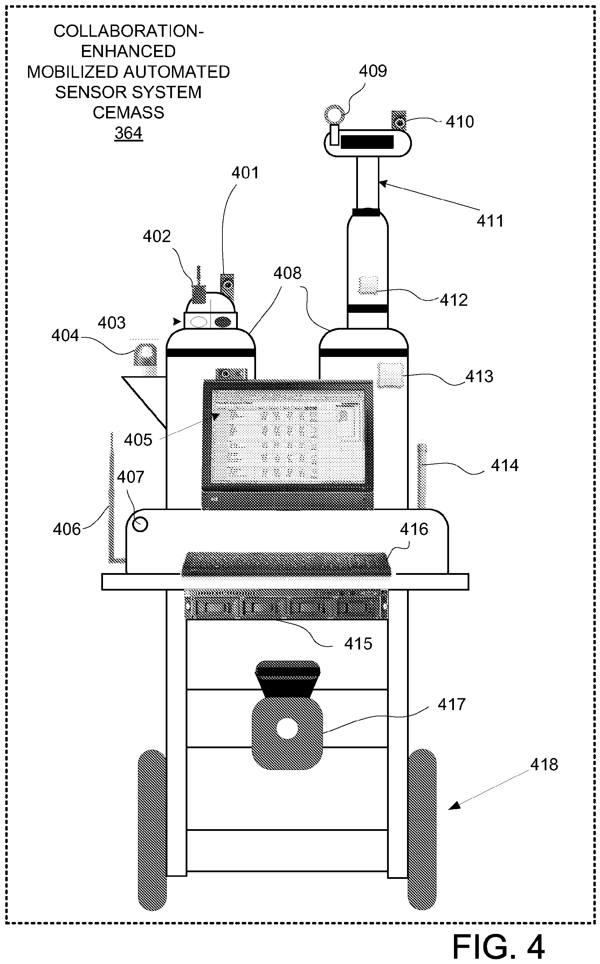

As shown in FIG. 4, mobilized automated sensor system CEMASS 364 is equipped to handle a variety of functions in a data-center context. CEMASS 364 includes a first camera 401 (e.g., a webcam or an internet-protocol "IP" cam), an active radio-frequency identifier or "RFID" sensor 402, humidity and temperature sensors 403, a warning light 404, a display screen 405, wireless connectivity 406 for remote management, linear actuator (with rear facing 30" stoke" 407, rotating turrets 408, a spot light 409, a second IP camera 410 with barcode/QR code reader capability, a zipper mast 411, an wireless-navigation tag 412, an ultra-high-frequency UHF RFID tag 413, a wireless antenna for connectivity and provisioning 414, a server 415, a console keyboard 416, a light-detection and ranging (LIDAR) system 417, and a wheeled propulsion system 418.

Cameras 401 and 410 can be used for remote visualization, e.g., of a backplane of a device to examine wiring and other components such as fans, power supplies, light indicators. Cameras can be used for image recognition, bar-code, QR code, and other types of optical reading including of human-readable text, video capture for analysis, and video conferencing. Two cameras permit concurrent wide-angle and close-up views of devices. Images and video feeds from these cameras can be fed to plural remote and on-site personnel to facilitate collaboration.

Camera 401 and 410 can be used to capture "before" and "after" images, e.g., of wiring patterns, can be used to confirm a repair or replacement. For example, a "before" image can be acquired of a device and its surroundings before cables are disconnected from the device. Cable can be disconnected. The device can be repaired and/or replaced. The cables reconnected. Then an "after" image can be acquired. The before and after images can be compared to determine whether or not the cables were reconnected correctly.

Wireless connectivity can be used for voice and computer communications. Voice communications can be between on-site personnel and remote personnel, e.g., at a management center, and/or between different off-site personnel. Server 415 can communicate with a management center, e.g., location data, device identification data, images, video, etc. Further, keyboard 418 and display 405 can be used with server 415 to define a terminal that allows on-site personnel access to database system 330 and other remote services.

Warning light 404 can be used to make on-site personnel aware of potentially hazardous work within the data center. Actuator 407 can be used to open/or close device access doors. Other sensors and systems can be used to extend the capabilities of a mobile sensor system as appropriate.

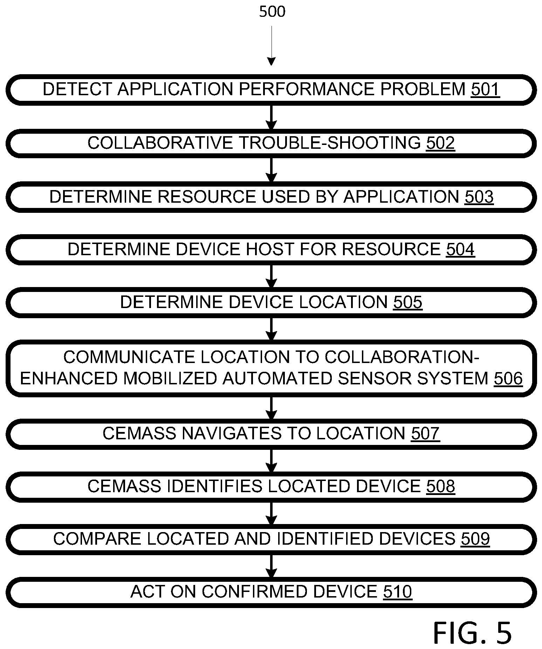

A use case process 500 for data system 300 is flow charted in FIG. 5. At 501, an application performance problem is detected, e.g., it is determined that an application is not performing as well as it should given the resources allocated to it. For example, performance monitor 316 may cooperate with workload manager 322 to make such a determination.

At 502, personnel may collaborate using communications facilities of the CEMASS 364, e.g., to trouble-shoot an application performance problem or a problem associated with an application performance problem. The parties to the collaboration may change as process 500 proceeds. For example, collaboration between an application user and off-site support personnel may identify a suspect data center hardware server. Subsequently, off-site support personnel may collaborate with on-site smart hands to address an identified problem.

At 503, a determination is made regarding the resources used by the poorly performing application. For example, a portion 332 of database 330 may be referenced to identify the resources relied on by the application. Some or all of the resources may be hardware equipment; some or all of the resources may be virtualized equipment, e.g., virtual servers, logical disks, logical channels. For example, an application may be executed on a virtual machine and may access a logical disk drive over virtual channels. To the extent an application is associated with virtual equipment, the virtual equipment can be associated with a hardware device, e.g., using portion 334 of database system 332, at 504.

At 505, the identified hardware equipment can be associated with a data-center location, e.g., a location within data center 302. The database associating hardware with its location may be the same database as one used to associate software with hardware, or a different one. Also, the database used to identify location may have more than one component. For example, an off-site database component may identify the data center that contains the hardware, while an on-site data-base, e.g., within data center 302, identifies the location within the data center of the equipment.

The location within a data center of a device of interest may be a two dimensional position, e.g., a floor-plan position. However, equipment is often stacked or arranged in racks. Accordingly, the location may be a three-dimensional position, e.g., including height as a dimension. For example, the height can be in meters above the floor or rack "U" position from a bottom of a rack. The two-dimensional position may specify a row or aisle-and-side of equipment and a longitudinal position along that row.

At 506, the identified location is communicated to CEMASS 364. This can be done with a wired communication while CEMASS 364 is docked at dock 366 or wirelessly using a wireless access point within data center 302. At 507, CEMASS 364 navigates to the identified location. Two-dimensional navigation is executed using wheeled propulsion system 418. Guidance may be provided using a combination of navigation technologies, including wireless real-time location services, LIDAR, vision via on-board cameras along with milestones or markings in the data center, e.g., floor markings. Navigation in the height dimension may be achieved by adjusting the height of mast 411.

At 508, MASS 364 identifies a hardware device, if any, found at the identified and navigated-to location. To this end, camera 401 and RFID sensor 402 can be used to read labels on or other label or identifier associated with the device. Identification can involve decoding RFID codes, bar codes, QR ("quick response") codes, etc.

At 509, the identities of the "identified" device identified at 503 and the "located" device identified at 507 can be compared. If they are the same, the location and located device are confirmed. Otherwise, there is a disconfirmation. In the former case, more in-depth diagnostics or intended repairs or replacement may proceed at 510. In the latter case, some corrective action, e.g., involving updating database system 330 is called for.

Data system 300 can provide for other use cases as well. CEMASS 364 can use face recognition and other techniques to authenticate personnel before admitting them to the data center. CEMASS 364 can monitor data center health, e.g., onsite detection of certain blind spots concerning the health of the data center (i.e., it may detect coolant leaks, failed air-conditioning units, jammed doors, loose power cords, hot spots, etc.).

Herein, a "system" is a set of interacting non-transitory tangible elements, wherein the elements can be, by way of example and not of limitation, mechanical components, electrical elements, atoms, physical encodings of instructions, and process segments. Herein, "process" refers to a sequence of actions resulting in or involving a physical transformation. "Storage medium" and "storage media" refer to a system including non-transitory tangible material in or on which information is or can be encoded so as to be readable. "Computer-readable" refers to storage media in which information is encoded in computer-readable form.

Herein, "machine", "device", and "computer" refer to hardware or a combination of hardware and software. However, a "virtual" machine, device or computer is a software analog or representation of a machine, device, or server, respectively, and not a "real" machine, device, or computer. A "server" is a real (hardware or combination of hardware and software) or virtual computer that provides services to computers. Herein, unless otherwise apparent from context, a functionally defined component of a computer is a combination of hardware and software executing on that hardware to provide the defined functionality.

In this specification, related art is discussed for expository purposes. Related art labeled "prior art", if any, is admitted prior art. Related art not labeled "prior art" is not admitted prior art. The illustrated and other described embodiments, as well as modifications thereto and variations thereupon are within the scope of the following claims.

## Claims

1. A process using:
a database system (102, 330) associating software with a hardware identity of an identified hardware entity used by said software, and associating said hardware identity with a location in a data center; and
a collaboration enhanced mobilized sensor system, CEMASS, (364),
the process comprising:
automatically detecting a performance problem associated with an application;
automatically identifying a virtual resource used by said application;
automatically identifying a used hardware device used by said virtual resource;
determining, by said database system (330), the location of the identified hardware device;
navigating said CEMASS (364), using a wheeled propulsion system (418) of said CEMASS, to said location;
using capturing sensors (401, 402, 410) of said CEMASS (364), capturing identity information from a located hardware device at said location to determine from said identity information whether said located hardware device is said identified hardware device; and
using video conferencing equipment of said CEMASS (364) for communication between off-site personnel and on-site personnel.

2. A process as recited in Claim 1 wherein said video conferencing equipment shares a video feed between a display screen (405) of the CEMASS (364) and an off-site position.

3. A reparation process including the process as recited in Claim 1 for reparation of a hardware device, further comprising:
capturing by a camera (401, 410) of the CEMASS (364) a before image of said located hardware device with cables attached;
performing, by on-site personnel, the following steps:
disconnecting said cables;
repairing or replacing said located hardware device; and
reconnecting said cables;
capturing by the camera (401, 410) an after image;
feeding said before and after images to off-site positions.

4. A process as recited in Claim 1 wherein said location is a three-dimensional location including height as a dimension.

5. A process as recited in Claim 4 wherein said navigating includes adjusting an extension of a mast to select a height.

6. A process as recited in Claim 1 wherein said identifying includes reading, by a radio-frequency identification, RFID, sensor (402), a RFID tag attached to said located hardware device.

7. A data system (100, 300) comprising:
a database system (102, 330) to,
associate software with a hardware identity of an identified hardware entity used by said software, and
associate said hardware identity with a location in a data center; and
a collaboration enhanced mobilized sensor system, CEMASS, (364) including:
video conferencing equipment configured to provide communication between off-site personnel and on-site personnel;
a wheeled propulsion system (418) to navigate to said location; and
a capturing sensor (401, 402, 410) to capture identity information physically associated with a located hardware entity at said location sufficient to determine whether said located hardware entity is said identified hardware entity,
wherein said database system (102, 330) further comprises a performance monitor (316) configured for:
detecting a performance problem associated with an application;
identifying a virtual resource used by said application; and
identifying a used hardware device used by said virtual resource, said used hardware device being said identified hardware entity.

8. A data system as recited in Claim 7 wherein said capturing sensor includes an imaging device (401, 410) and said video conferencing equipment provides for sharing images obtained by said imaging device to be shared by said personnel.

9. A data system as recited in Claim 7 wherein said software entity includes a virtualized device.

10. A data system as recited in Claim 7 wherein said CEMASS (364) comprises an on-board navigation system.

11. A data system as recited in Claim 7 further including a dock (366) with which said CEMASS (364) is configured to engage so as to charge a battery.

12. A data system as recited in Claim 8, **characterized by** being configured so that:
said imaging device (401, 410) captures a before image of said located hardware device;
waiting for on-site personnel to perform the following steps:
disconnecting cables associated to said located hardware device;
repairing or replacing said located hardware device; and
reconnecting said cables;
said imaging device (401, 410) captures a before image of said located hardware device.

13. A data system as recited in Claim 10, **characterized in that** said on-board navigation system comprises light-detection and ranging, LIDAR, system (417).

## Patentansprüche

1. Vorgang, der Folgendes verwendet:
ein Datenbanksystem (102, 330), das Software mit einer Hardware-Identität einer von der Software verwendeten identifizierten Hardwareentität verknüpft und die Hardwareentität mit einem Standort in einem Rechenzentrum verknüpft; und
ein kollaborationsverstärktes mobilisiertes Sensorsystem, CEMASS, (364),
wobei der Vorgang Folgendes umfasst:
automatisches Erkennen eines mit einer Anwendung verknüpften Leistungsproblems;
automatisches Identifizieren einer von der Anwendung verwendeten virtuellen Ressource;
automatisches Identifizieren eines verwendeten Hardwaregeräts, das von der virtuellen Ressource verwendet wird;
Bestimmen, durch das Datenbanksystem (330), des Standorts des identifizierten Hardwaregeräts;
Navigieren des CEMASS (364) an den Standort unter Verwendung eines rollenden Antriebssystems (418) des CEMASS;
Verwenden von Erfassungssensoren (401, 402, 410) des CEMASS (364), Erfassen von Identitätsinformationen von einem an dem Standort gefundenen Hardwaregerät, um aus den Identitätsinformationen zu bestimmen, ob das gefundene Hardwaregerät das identifizierte Hardwaregerät ist; und
Verwenden einer Videokonferenzausrüstung des CEMASS (364) zum Kommunizieren zwischen externem Personal und internem Personal.

2. Vorgang nach Anspruch 1, wobei die Videokonferenzausrüstung einen Videobeitrag zwischen einem Bildschirm (405) des CEMASS (364) und einer externen Position teilt.

3. Reparaturvorgang, einschließlich des Vorgangs nach Anspruch 1 zum Reparieren eines Hardwaregeräts, ferner umfassend:
Erfassen, durch eine Kamera (401, 410) des CEMASS (364), einer Vorabbildung des gefundenen Hardwaregeräts mit angeschlossenen Kabeln;
Durchführen, durch internes Personal, der folgenden Schritte:
Trennen der Kabel;
Reparieren oder Austauschen des gefundenen Hardwaregeräts; und
Wiederanschließen der Kabel;
Erfassen, durch die Kamera (401, 410), einer Nachabbildung;
Zuführen der Vor- und Nachabbildung an externe Positionen.

4. Vorgang nach Anspruch 1, wobei der Standort ein dreidimensionaler Standort ist, der Höhe als eine Dimension enthält.

5. Vorgang nach Anspruch 4, wobei das Navigieren ein Einstellen einer Verlängerung eines Masts zum Auswählen einer Höhe enthält.

6. Vorgang nach Anspruch 1, wobei das Identifizieren ein Auslesen, durch einen Hochfrequenz-Identifikations-, RFID-, Sensor (402), eines an das gefundene Hardwaregerät angebrachten RFID-Etiketts enthält.

7. Datensystem (100, 300), Folgendes umfassend:
ein Datenbanksystem (102, 330) zum
Verknüpfen von Software mit einer Hardware-Identität einer von der Software verwendeten identifizierten Hardwareentität und
Verknüpfen der Hardwareentität mit einem Standort in einem Rechenzentrum; und
ein kollaborationsverstärktes mobilisiertes Sensorsystem, CEMASS, (364),
enthaltend:
Videokonferenzausrüstung, die konfiguriert ist, eine Kommunikation zwischen externem Personal und internem Personal bereitzustellen;
ein rollendes Antriebssystem (418) zum Navigieren an den Standort; und
einen Erfassungssensor (401, 402, 410) zum Erfassen von Identitätsinformationen, die physisch mit einer gefundenen Hardwareentität an dem Standort verknüpft ist, ausreichend zum Bestimmen, ob die gefundene Hardwareentität die identifizierte Hardwareentität ist,
wobei das Datenbanksystem (102, 330) ferner einen Leistungsmonitor (316) umfasst, der konfiguriert ist zum:
Erkennen eines mit einer Anwendung verknüpften Leistungsproblems;
Identifizieren einer von der Anwendung verwendeten virtuellen Ressource; und
Identifizieren eines verwendeten Hardwaregeräts, das von der virtuellen Ressource verwendet wird, wobei das verwendete Hardwaregerät das identifizierte Hardwaregerät ist.

8. Datensystem nach Anspruch 7, wobei der Erfassungssensor ein Bildverarbeitungsgerät (401, 410) enthält und die Videokonferenzausrüstung das Teilen von durch das Bildverarbeitungsgerät gewonnenen Bildern, die von dem Personal zu teilen sind, gewährleistet.

9. Datensystem nach Anspruch 7, wobei die Softwareentität ein virtualisiertes Gerät enthält.

10. Datensystem nach Anspruch 7, wobei das CEMASS (364) ein bordeigenes Navigationssystem umfasst.

11. Datensystem nach Anspruch 7, ferner enthaltend ein Dock (366), wobei das CEMASS (364) konfiguriert ist, mit diesem in Eingriff zu treten, um eine Batterie aufzuladen.

12. Datensystem nach Anspruch 8, **dadurch gekennzeichnet, dass** es konfiguriert ist, sodass:
das Bildverarbeitungsgerät (401, 410) eine Vorabbildung des gefundenen Hardwaregeräts erfasst;
Warten, dass das interne Personal die folgenden Schritte ausführt:
Trennen von mit dem gefundenen Hardwaregerät verknüpften Kabeln;
Reparieren oder Austauschen des gefundenen Hardwaregeräts; und
Wiederanschließen der Kabel;
das Bildverarbeitungsgerät (401, 410) eine Vorabbildung des gefundenen Hardwaregeräts erfasst.

13. Datensystem nach Anspruch 10, **dadurch gekennzeichnet, dass** das bordeigene Navigationssystem ein Lichterkennungs- und Entfernungsmessungs-, LIDAR-, System (417) umfasst.

## Revendications

1. Procédé utilisant :
un système de base de données (102, 330) associant le logiciel à une identité matérielle d'une entité matérielle identifiée utilisée par ledit logiciel, et associant ladite identité matérielle à un emplacement dans un centre de données ; et
un système de capteurs mobilisés à collaboration améliorée, CEMASS, (364),
le procédé comprenant :
la détection automatique d'un problème de performance associé à une application ;
l'identification automatique d'une ressource virtuelle utilisée par ladite application ;
l'identification automatique d'un dispositif matériel utilisé par ladite ressource virtuelle ;
la détermination, par ledit système de base de données (330), de l'emplacement du dispositif matériel identifié ;
la navigation dudit CEMASS (364), au moyen d'un système de propulsion à roues (418) dudit CEMASS, vers ledit emplacement ;
l'utilisation de capteurs de capture (401, 402, 410) dudit CEMASS (364), capturant des informations d'identité à partir d'un dispositif matériel localisé au niveau dudit emplacement pour déterminer à partir desdites informations d'identité si ledit dispositif matériel localisé est ledit dispositif matériel identifié ; et
l'utilisation d'un équipement de vidéoconférence dudit CEMASS (364) pour une communication entre le personnel hors site et le personnel sur site.

2. Procédé selon la revendication 1 dans lequel ledit équipement de vidéoconférence partage un flux vidéo entre un écran d'affichage (405) du CEMASS (364) et une position hors site.

3. Procédé de réparation comprenant le procédé selon la revendication 1 pour la réparation d'un dispositif matériel, comprenant en outre :
la capture par une caméra (401, 410) du CEMASS (364) d'une image avant dudit dispositif matériel localisé à câbles fixés ;
la réalisation, par le personnel sur site, des étapes suivantes :
la déconnexion desdits câbles ;
la réparation ou le remplacement dudit dispositif matériel localisé ; et
la reconnexion desdits câbles ;
la capture par la caméra (401, 410) d'une image consécutive ;
la transmission desdites images avant et consécutive vers des positions hors site.

4. Procédé selon la revendication 1 dans lequel ledit emplacement est un emplacement tridimensionnel comprenant une hauteur comme une dimension.

5. Procédé selon la revendication 4 dans lequel ladite navigation comprend l'ajustement d'une extension d'un mât pour sélectionner une hauteur.

6. Procédé selon la revendication 1 dans lequel ladite identification comprend la lecture, par un capteur, RFID, d'identification par radiofréquence (402), d'une étiquette RFID fixée audit dispositif matériel localisé.

7. Système de données (100, 300) comprenant :
un système de base de données (102, 330) pour,
associer le logiciel à une identité matérielle d'une entité matérielle identifiée utilisée par ledit logiciel, et
associer ladite identité matérielle à un emplacement dans un centre de données ; et
un système de capteurs mobilisés à collaboration améliorée, CEMASS, (364) comprenant :
un équipement de vidéoconférence conçu pour fournir une communication entre le personnel hors site et le personnel sur site ;
un système de propulsion à roues (418) pour naviguer vers ledit emplacement ; et
un capteur de capture (401, 402, 410) pour capturer des informations d'identité physiquement associé à une entité matérielle localisée au niveau dudit emplacement suffisantes pour déterminer si ladite entité matérielle localisée est ladite entité matérielle identifiée,
dans lequel ledit système de base de données (102, 330) comprend en outre un moniteur de performance (316) conçu pour :
détecter un problème de performance associé à une application ;
identifier une ressource virtuelle utilisée par ladite application ; et
identifier un dispositif matériel utilisé par ladite ressource virtuelle, ledit dispositif matériel utilisé étant ladite entité matérielle identifiée.

8. Système de données selon la revendication 7 dans lequel ledit capteur de capture comprend un dispositif d'imagerie (401,410) et ledit équipement de vidéoconférence permet de partager des images obtenues par ledit dispositif d'imagerie à partager par ledit personnel.

9. Système de données selon la revendication 7 dans lequel ladite entité logicielle comprend un dispositif virtualisé.

10. Système de données selon la revendication 7 dans lequel ledit CEMASS (364) comprend un système de navigation embarqué.

11. Système de données selon la revendication 7 comprenant en outre une station d'accueil (366) avec laquelle ledit CEMASS (364) est conçu pour se mettre en prise de sorte à charger une batterie.

12. Système de données selon la revendication 8, **caractérisé en ce qu'**il est conçu de sorte que :
ledit dispositif d'imagerie (401, 410) capture une image avant dudit dispositif matériel localisé ;
dans l'attente que le personnel sur site réalise les étapes suivantes :
la déconnexion de câbles associés audit dispositif matériel localisé ;
la réparation ou le remplacement dudit dispositif matériel localisé ; et
la reconnexion desdits câbles ;
ledit dispositif d'imagerie (401, 410) capture une image avant dudit dispositif matériel localisé.

13. Système de données selon la revendication 10, **caractérisé en ce que** ledit système de navigation embarqué comprend un système, LIDAR, de détection de lumière et de télémétrie (417).
